# EUROPÄISCHE PATENTSCHRIFT

(11) **EP 1 227 895 B1**
(45) Veröffentlichungstag und Bekanntmachung des Hinweises auf die Patenterteilung: **24.11.2004**
(21) Anmeldenummer: 00969302.9
(22) Anmeldetag: 26.09.2000
(51) Int. Cl.: B05D 7/00, B05D 7/14

(54) **VERFAHREN ZUR HERSTELLUNG VON BASISLACK/KLARLACK-ZWEISCHICHTLACKIERUNGEN UND/ODER TRANSPARENTEN VERSIEGELUNGSSCHICHTEN**
METHOD FOR PRODUCING BASE VARNISH/CLEAR VARNISH-TWO-COAT VARNISHES AND/OR TRANSPARENT SEALING LAYERS
PROCEDE DE FABRICATION DE VERNISSAGES BI-COUCHES VERNIS DE BASE/VERNIS CLAIR ET/OU DE COUCHES COUVRE-NOEUDS TRANSPARENTES

(30) Priorität: 02.10.1999 DE 19947433; 25.11.1999 DE 19956659
(43) Veröffentlichungstag der Anmeldung: 07.08.2002
(73) Patentinhaber: E.I. DU PONT DE NEMOURS AND COMPANY, Wilmington, Delaware 19898 (US)
(72) Erfinder: BRANDT, Lutz, 45257 Essen (DE); FLOSBACH, Carmen, 42287 Wuppertal (DE); FRIGGE, Eva, 45549 Sprockhövel (DE); KRUMPOLT, Frank-Jürgen, 42389 Wuppertal (DE); KURZ, Christine, 42659 Solingen (DE); MAAG, Karin, 79594 Inzlingen (DE); MATTEN, Stefanie, 42111 Wuppertal (DE); REKOWSKI, Volker, 44892 Bochum (DE)
(74) Vertreter: Gille Hrabal Struck Neidlein Prop Roos
(86) Internationale Anmeldenummer: PCT/EP2000/009387
(87) Internationale Veröffentlichungsnummer: WO 2001/024946

(56) Entgegenhaltungen:
- DE-A- 19 604 177
- DE-C- 19 635 447

## Beschreibung

Die Erfindung betrifft ein Verfahren zur Herstellung von transparenten Überzugsschichten, insbesondere der Klarlackschichten von dekorativen Basislack/Klarlack-Zweischichtlackierungen und/oder von transparenten Versiegelungsschichten auf der äußeren Überzugschicht von lackierten Oberflächen eines Substrats unter Verwendung strahlenhärtender Überzugsmittel, sowie die dabei erhaltenen Substrate.

Aus EP-A-0 540 884 und WO 98 40 171 sind Verfahren zur Herstellung von Mehrschichtlackierungen durch Auftrag einer Klarlackschicht aus einem strahlenhärtbaren Überzugsmittel auf eine pigmentierte Basislackschicht und nachfolgende Härtung der Klarlackschicht durch Einwirkung aktinischer Strahlung bekannt. In beiden Patentdokumenten werden unter anderem Klarlackzusammensetzungen beschrieben, die Urethan(meth)acrylate enthalten.

Die Klarlackformulierungen gemäß EP-A-0 540 884 und WO 98 40 171 sind geeignet zur Herstellung kratzfester Basislack/Klarlack-Zweischichtlackierungen, die Flexibilität der Zweischichtlackierungen ist jedoch verbesserungsbedürftig. Die in den Beispielen von EP-A-0 540 884 und WO 98 40 171 genannten Klarlacke weisen relativ hohe Gehalte an schwer oder nicht flüchtigen Reaktivverdünnern auf, die nach der Applikation der Klarlacke zu einem unerwünschten Anlösen der Basislackschichten mit der Folge von Farbton- oder Effektabweichungen führen können.
Aus der EP-A-0 568 967 ist ein Verfahren zur Herstellung von Mehrschichtlackierungen durch Auftrag einer wärmehärtbaren Klarlackschicht auf eine pigmentierte Basislackschicht, nachfolgende Wärmehärtung und Auftrag einer weiteren Klarlackschicht auf der Basis von strahlenhärtbaren Überzugsmitteln und nachfolgende Härtung der zweiten Klarlackschicht durch Einwirkung aktinischer Strahlung bekannt.

Die Anforderungen an die Kratzbeständigkeit von Fahrzeuglackierungen steigen ständig. Nach den Beispielen der EP-A-0 568 697 hergestellte Mehrschichtlackierungen sind zwar kratzfest, jedoch sehr spröde.

Aufgabe der Erfindung ist die Bereitstellung eines Verfahrens zur Herstellung von transparenten Überzugsschichten, insbesondere im Rahmen von Basislack/Klarlack-Zweischichtlackierungen und/oder von transparenten Versiegelungsschichten auf der äußeren Überzugsschicht einer lackierten Substratoberfläche, wobei die äußere Klarlackschicht und/oder Versiegelungsschicht neben hervorragender Kratzfestigkeit eine gute Flexibilität aufweist. Die Basislack/Klarlack-Zweischichtlackierungen und/oder Versiegelungsschichten sollen als Fahrzeuglackierung geeignet sein. Farbton- und Effektabweichungen durch Anlösen der Basislackschichten durch den Klarlack sollen nicht auftreten.

Die Aufgabe kann gelöst werden, wenn man eine durch radikalische Polymerisation härtbare Klarlackschicht auf eine zuvor aufgebrachte farb- und/oder effektgebende Basislackschicht und/oder eine transparente Überzugsmittelschicht auf der äußeren Überzugsschicht einer lackierten Substratoberfläche aufbringt und unter Einwirkung energiereicher Strahlung aushärtet, wobei zur Aufbringung der äußeren Klarlackdeckschicht und/oder Versiegelungsschicht ein transparentes Überzugsmittel verwendet wird, dessen Harzfestkörper als wesentlichen oder einzigen Bestandteil ein aliphatisches Urethan(meth)acrylat enthält.
Gegenstand der Erfindung ist daher ein Verfahren zur Herstellung einer Basislack/Klarlack-Zweischichtlackierung und/oder einer transparenten Versiegelungsschicht auf der äußeren Überzugsschicht einer lackierten Substratoberfläche, bei dem man eine durch radikalische Polymerisation härtbare Klarlackschicht auf eine zuvor aufgebrachte farb- und/oder effektgebende Basislackschicht und/oder eine transparente Überzugsmittelschicht auf die äußere Überzugsschicht einer lackierten Substartoberfläche aufbringt und unter Einwirkung energiereicher Strahlung aushärtet, dadurch gekennzeichnet, daß man zur Aufbringung der äußeren Klarlackschicht und/oder Versiegelungsschicht ein transparentes Überzugsmittel verwendet, dessen Harzfestkörper besteht aus:
I. 70 bis 100 Gew.-%, bevorzugt 90 bis 100 Gew.-%, eines oder mehrerer radikalisch polymerisierbare, olefinisch ungesättigte Gruppen aufweisender Oligo- und/oder Prepolymerer und
II. 0 bis 30 Gew.-%, bevorzugt 0 bis 10 Gew.-%, eines oder mehrerer radikalisch polymerisierbare, olefinisch ungesättigte Gruppen aufweisender Reaktivverdünner mit errechneten Molmassen von jeweils unter 500,
wobei die Komponente I zu 75 bis 100 Gew.% aus einem aliphatischen Urethan(meth)acrylat mit einer (Meth)acryloylfunktionalität von durchschnittlich 3 bis 4,5 pro Molekül und einer errechneten Molekularmasse von mindestens 826 besteht, welches erhältlich ist durch Umsetzung von acyclischen aliphatischen Diisocyanaten mit 8 C-Atomen und/oder von solchen Diisocyanaten abgeleiteten Polyisocyanaten mit einer oder mehreren niedermolekularen aliphatischen Verbindungen, die eine oder mehrere Hydroxylgruppen und zugleich eine oder mehrere (Meth)acryloylgruppen aufweisen, sowie gegebenenfalls mit einem oder mehreren niedermolekularen aliphatischen Diolen und/oder Polyolen.

Unter (Meth)acryl wird hier Acryl- und/oder Methacryl verstanden.

Der Harzfestkörper der im erfindungsgemäßen Verfahren zur Herstellung der Klarlackdeckschicht und/oder Versiegelungsschicht verwendeten Überzugsmittel besteht aus Bindemittel (Komponente I) und gegebenenfalls vorhandenem Reaktivverdünner (Komponente II) im vorstehend angegebenen Gewichtsverhältnis. Der Begriff "Harzfestkörper" berücksichtigt nicht, daß die Komponente I oder insbesondere die Komponente II eventuell flüchtige, beispielsweise während Applikation oder Härtung der Klarlackdeckschicht und/oder Versiegelungsschicht flüchtige Anteile enthalten kann und schließt derartige Anteile daher nicht aus.
Es ist erfindungswesentlich, daß die Komponente I zu 75 bis 100 Gew.-%, bevorzugt zu 90 bis 100 Gew.-%, besonders bevorzugt zu 100 Gew.-% aus einem aliphatischen Urethan(meth)acrylat mit einer (Meth)acryloylfunktionalität von durchschnittlich 3 bis 4,5 pro Molekül, bevorzugt über 3 und unter 4, und einer errechneten Molekularmasse von mindestens 826, beispielsweise bis unter 2500 besteht, wobei das aliphatische Urethan(meth)acrylat erhältlich ist durch Umsetzung eines acyclischen aliphatischen Diisocyanats mit 8 C-Atomen und/oder auf solchen Diisocyanaten basierenden Polyisocyanaten mit einer oder mehreren niedermolekularen aliphatischen Verbindungen, die eine oder mehrere Hydroxylgruppen und zugleich eine oder mehrere (Meth)acryloylgruppen aufweisen, sowie gegebenenfalls mit einem oder mehreren niedermolekularen aliphatischen Diolen und/oder Polyolen.

Bei Unterschreitung der (Meth)acryloylfunktionalität von durchschnittlich 3 pro Molekül des aliphatischen Urethan(meth)acrylats ist die Kratzfestigkeit der im erfindungsgemäßen Verfahren hergestellten Klarlackdeckschicht und/oder Versiegelungsschicht nicht zufriedenstellend, während deren Flexibilität die gestellten Anforderungen erfüllt. Bei Überschreitung der (Meth)acryloylfunktionalität von durchschnittlich 4,5 pro Molekül des aliphatischen Urethan(meth)acrylats sind sowohl Kratzfestigkeit als auch Flexibilität der im erfindungsgemäßen Verfahren hergestellten Klarlackdeckschicht und/oder Versiegelungsschicht nicht zufriedenstellend. Überraschenderweise wird offenbar im Bereich einer (Meth)acryloylfunktionalität von durchschnittlich 3 bis 4,5 pro Molekül des aliphatischen Urethan(meth)acrylats ein Optimum hinsichtlich der Verbindung von Kratzfestigkeit und Flexibilität der im erfindungsgemäßen Verfahren hergestellten Klarlackdeckschicht und/oder Versiegelungsschicht durchlaufen.

Die Verwendung des vorstehend definierten aliphatischen Urethan(meth)acrylats erlaubt Klarlacküberzugsmittel und/oder Versiegelungsüberzugsmittel mit einem nur geringen Gehalt an oder ohne Reaktivverdünner (Komponente II) im Harzfestkörper zu formulieren. Eine Basislackschichten anlösende Wirkung der im erfindungsgemäßen Verfahren eingesetzten Klarlacküberzugsmittel kann somit minimiert oder praktisch ausgeschlossen werden.

Das aliphatische Urethan(meth)acrylat der Komponente I kann hergestellt werden, indem acyclische aliphatische Diisocyanate mit 8 C-Atomen und/oder auf solchen Diisocyanaten basierende Polyisocyanate mit einer oder mehreren niedermolekularen aliphatischen Verbindungen, die eine oder mehrere Hydroxylgruppen und zugleich eine oder mehrere (Meth)acryloylgruppen aufweisen, sowie gegebenenfalls mit einem oder mehreren niedermolekularen aliphatischen Diolen und/oder Polyolen umgesetzt werden. Es ist bevorzugt, wenn niedermolekulare aliphatische Diole und/oder Polyole bei der Herstellung der aliphatischen Urethan(meth)acrylate miteingesetzt werden. Das stöchiometrische Verhältnis zwischen Isocyanaten, niedermolekularen aliphatischen Verbindungen, die eine oder mehrere Hydroxylgruppen und zugleich eine oder mehrere (Meth)acryloylgruppen aufweisen, und bevorzugt miteingesetzten niedermolekularen aliphatischen Diolen und/oder Polyolen wird so gewählt, daß das aliphatische Urethan(meth)acrylat eine (Meth)acryloylfunktionalität von durchschnittlich 3 bis 4,5, bevorzugt mehr als 3 und unter 4 pro Molekül und eine errechnete Molekularmasse von mindestens 826, beispielsweise bis unter 2500, bevorzugt unter 2000 aufweist. Im bevorzugten Fall des Miteinsatzes von niedermolekularen aliphatischen Diolen und/oder Polyolen bei der Herstellung des aliphatischen Urethan(meth)acrylats der Komponente I beträgt das Verhältnis von Hydroxylequivalenten aus den niedermolekularen aliphatischen Diolen und/oder Polyolen zu Hydroxylequivalenten aus niedermolekularen aliphatischen Verbindungen, die eine oder mehrere Hydroxylgruppen und zugleich eine oder mehrere (Meth)acryloylgruppen aufweisen, beispielsweise bevorzugt von 0,05 : 1 bis 0,5 : 1.

Die Umsetzung zum aliphatischen Urethan(meth)acrylat kann in einem einzigen Syntheseschritt erfolgen. Werden, wie es bevorzugt ist, niedermolekulare aliphatische Diole und/oder Polyole bei der Synthese des aliphatischen Urethan(meth)acrylats miteingesetzt, ist die Herstellung in mehreren aufeinander folgenden Syntheseschritten bevorzugt, beispielsweise indem zunächst in einem oder mehreren Syntheseschritten aus Di- bzw. Polyisocyanat und niedermolekularen aliphatischen Diol(en) und/oder Polyol(en) ein Isocyanatgruppen aufweisendes Urethanprepolymer mit einem auf den Festkörper bezogenen Isocyanatgehalt von beispielsweise 10 bis 20 Gew.-% (berechnet als NCO, Formelgewicht 42) hergestellt wird, welches anschließend mit einer oder mehreren niedermolekularen aliphatischen Verbindungen, die eine oder mehrere Hydroxylgruppen und zugleich eine oder mehrere (Meth)acryloylgruppen aufweisen, zum aliphatischen Urethan(meth)acrylat umgesetzt wird. Gleiches gilt für den Fall, wenn neben niedermolekularen aliphatischen Verbindungen, die eine Hydroxylgruppe und zugleich eine oder mehrere (Meth)acryloylgruppen aufweisen, auch niedermolekulare aliphatische Verbindungen, die mehrere Hydroxylgruppen und zugleich eine oder mehrere (Meth)acryloylgruppen aufweisen, bei der Synthese des aliphatischen Urethan(meth)acrylats eingesetzt werden.

Die Herstellung des aliphatischen Urethan(meth)acrylats kann lösemittelfrei in der Schmelze oder in Gegenwart von inerten Lösemitteln, wie z.B. Xylol, Butylacetat, N-Methylpyrrolidon bei Temperaturen beispielsweise von 20 bis 80°C erfolgen. Die Lösemittel können anschließend bis zum gewünschten Gehalt entfernt werden, beispielsweise durch Destillation im Vakuum.

Bei den zur Synthese der aliphatischen Urethan(meth)acrylate eingesetzten Di- bzw. Polyisocyanaten handelt es sich um acyclische aliphatische Diisocyanate mit 8 C-Atomen wie Methylpentandiisocyanat (MPDI) oder Hexandiisocyanat (HDI), sowie bevorzugt auf diesen Diisocyanaten basierende Polyisocyanate, die Heteroatome im die Isocyanatgruppen verknüpfenden Rest enthalten. Beispiele hierfür sind Carbodiimidgruppen, Allophanatgruppen, Isocyanuratgruppen, Uretdiongruppen und/oder Biuretgruppen aufweisende, auf acyclischen aliphatischen Diisocyanaten mit 8 C-Atomen, wie z.B. auf MPDI und/oder auf HDI basierende Polyisocyanate. Bevorzugt sind HDI-basierende Polyisocyanate. Besonders bevorzugt sind die in der Lacktechnologie bekannten HDI-basierenden Polyisocyanate, wie das Tris-(6-isocyanatohexyl)-biuret und das sich von HDI ableitende Isocyanurat.

Bei den zur Herstellung des aliphatischen Urethan(meth)acrylats eingesetzten niedermolekularen aliphatischen Verbindungen, die eine oder mehrere Hydroxylgruppen und zugleich eine oder mehrere (Meth)acryloylgruppen aufweisen, handelt es sich beispielsweise um Verbindungen aus deren Summenformel sich ein Molekulargewichtsbereich beispielsweise von 116 bis 340 errechnet. Es kann sich um cycloaliphatische, bevorzugt aber um acyclische aliphatische Verbindungen handeln, die eine oder mehrere, beispielsweise zwei oder drei Hydroxylgruppen und zugleich eine oder mehrere, beispielsweise zwei oder drei (Meth)acryloylgruppen als Substituenten tragen. Bevorzugt sind niedermolekulare aliphatische Verbindungen, die jeweils nur eine Hydroxylgruppe und nur eine (Meth)acryloylgruppe tragen. Beispiele sind Pentaerythrittri-, -di- und -mono(meth)acrylat, Glycerindi- und -mono(meth)acrylat, Trimethylolpropandi- und -mono(meth)acrylat. Beispiele für die bevorzugten, nur eine Hydroxyl- und nur eine (Meth)acryloylgruppe pro Molekül aufweisenden niedermolekularen aliphatischen Verbindungen sind Hydroxyalkyl(meth)acrylate wie z.B. Hydroxyethyl(meth)acrylat. die isomeren Hydroxypropyl(meth)acrylate, die isomeren Hydroxybutyl(meth)acrylate, aber auch Addukte von Glycidyl(meth)acrylat und aliphatischen Monocarbonsäuren oder Addukte von (Meth)acrylsäure und gesättigten Monoepoxidverbindungen wie Versaticsäureglycidylester.

Bei den zur Herstellung des aliphatischen Urethan(meth)acrylats bevorzugt miteingesetzten niedermolekularen aliphatischen Diolen und/oder Polyolen handelt es sich beispielsweise um Verbindungen aus deren Summenformel sich ein Molekulargewichtsbereich beispielsweise von 62 bis 236 errechnet. Es kann sich um cycloaliphatische, bevorzugt aber um acyclische aliphatische Verbindungen handeln, die zwei oder mehrere, beispielsweise bis zu vier Hydroxylgruppen als Substituenten tragen. Beispiele für Polyole sind Pentaerythrit, Trimethylolpropan, Glycerin. Beispiele für Diole sind Ethylenglykol, Propylenglykol, Butandiol, Pentandiol, Hexandiol, Neopentylglykol, Butylethylpropandiol, Esterdiol 204 (Pivalylpivalat), Cyclohexandiol, Cyclohexandimethanol, hydriertes Bisphenol A. Falls die aliphatischen Urethan(meth)acrylate in Wasser selbstemulgierende Eigenschaften besitzen sollen, können entsprechende Mengenanteile von niedermolekularen aliphatischen Diolen und/oder Polyolen, die ionische oder in ionische Gruppen überführbare Gruppen aufweisen, bei der Synthese des aliphatischen Urethan(meth)acrylats mitverwendet werden. Beispielsweise können Carboxylgruppen tragende niedermolekulare aliphatische Diole und/oder Polyole, wie Dimethylolpropionsäure,beispielsweise in einem dem aliphatischen Urethan(meth)acrylat eine Säurezahl von 15 bis 60 mg KOH/g verleihenden Mengenanteil als niedermolekulares aliphatisches Diol verwendet werden.

Die Komponente I des Harzfestkörpers der Klarlacküberzugsmittel und/oder Versiegelungsüberzugsmittel kann 0 bis 25, bevorzugt nur 0 bis 10 Gew.-% von den vorstehend beschriebenen aliphatischen Urethan(meth)acrylaten verschiedene Poly- oder Oligomere, die radikalisch polymerisierbare, olefinische Doppelbindungen, insbesondere (Meth)acryloylgruppen im Molekül aufweisen, enthalten. Solche Poly- oder Oligomere haben beispielsweise zahlenmittlere Molekularmassen (Mn) im Bereich von 500 bis 10000, besonders bevorzugt von 500 bis 3000 und weisen beispielsweise durchschnittlich 2 bis 20, bevorzugt 3 bis 10 radikalisch polymerisierbare, olefinische Doppelbindungen pro Molekül auf. Beispiele für solche Poly- oder Oligomere sind entsprechende (meth)acrylfunictionelle (Meth)acrylcopolymere, Epoxidharz(meth)acrylate, Polyester(meth)acrylate, Polyether(meth)acrylate, von den aliphatischen Urethan(meth)acrylaten der Komponente I verschiedene Polyurethan(meth)acrylate, ungesättigte Polyester, ungesättigte Polyurethane oder Silikon(meth)acrylate. Besonders bevorzugt enthält die Komponente I des Harzfestkörpers der Klarlacküberzugsmittel und/oder Versiegelungsüberzugsmittel keine von den vorstehend beschriebenen aliphatischen Urethan(meth)acrylaten verschiedene Poly- oder Oligomere mit radikalisch polymerisierbaren, olefinischen Doppelbindungen.

Der Harzfestkörper der Klarlacküberzugsmittel und/oder Versiegelungsüberzugsmittel kann als Komponente II 0 bis 30, mehr bevorzugt 0 bis 10 Gew.-% und noch bevorzugter 0 bis 5 Gew.-% eines oder mehrerer radikalisch polymerisierbare, olefinisch ungesättigte Gruppen aufweisender Reaktivverdünner mit errechneten Molmassen von jeweils unter 500 enthalten. Es ist besonders bevorzugt, den Anteil der Reaktivverdünner am Harzfestkörper niedrig zu wählen und insbesondere auf die Anwesenheit von Reaktiwerdünnern im Klarlacküberzugsmittel und/oder Versiegelungsüberzugsmittel zu verzichten. Bei den Reaktiwerdünnern der Komponente II handelt es sich um niedermolekulare Verbindungen, die mono-, di- oder polyungesättigt sein können. Bei den Reaktivverdünnern kann es sich um flüchtige oder schwer oder nichtflüchtige Verbindungen handeln. Beispiele für Reaktivverdünner sind: (Meth)acrylsäure und deren Ester, Maleinsäure und deren Halbester, Vinylacetat, Vinylether, substituierte Vinylharnstoffe, Ethylen- und Propylenglykoldi(meth)acrylat, 1,3- und 1,4-Butandioldi(meth)acrylat, Vinyl(meth)acrylat, Allyl(meth)acrylat, Glycerintri- , -di- und -mono(meth)acrylat, Trimethylolpropantri-, -di- und -mono(meth)acrylat, Styrol, Vinyltoluol, Divinylbenzol, Pentaerythrittri- und -tetra(meth)acrylat, Di- und Tripropylenglykoldi(meth)acrylat, Hexandioldi(meth)acrylat, sowie deren Gemische.

Bevorzugt enthalten die Klarlacküberzugsmittel und/oder Versiegelungsüberzugsmittel, Photoinitiatoren, z.B. in Mengen von 0,1 bis 5 Gew.-%, bezogen auf den Harzfestkörper. Es ist günstig, wenn die Absorption der Photoinitiatoren im Wellenlängenbereich von 260 bis 450 nm liegt. Beispiele für Photoinitiatoren sind Benzoin und -derivate, Acetophenon und -derivate, z.B. 2,2-Diacetoxyacetophenon, Benzophenon und -derivate, Thioxanthon und -derivate, Anthrachinon, 1-Benzoylcyclohexanol, phosphororganische Verbindungen, wie z.B. Acylphospinoxide. Die Photoinitiatoren können allein oder in Kombination eingesetzt werden. Außerdem können weitere synergistische Komponenten. z.B. tertiäre Amine, eingesetzt werden.

Die im erfindungsgemäßen Verfahren eingesetzten Klarlacküberzugsmittel und/oder Versiegelungsüberzugsmittel können thermisch aktivierbare Radikalinitiatoren enthalten. Beispiele für thermolabile Radikalinitiatoren sind: organische Peroxide, organische Azoverbindungen oder C-C-spaltende Initiatoren, wie Dialkylperoxide, Peroxocarbonsäuren, Peroxodicarbonate, Peroxidester, Hydroperoxide, Ketonperoxide, Azodinitrile oder Benzpinakolsilylether. Die bevorzugten Einsatzmengen liegen zwischen 0,1 bis 5 Gew.-%, bezogen auf den Harzfestkörper.

Die im erfindungsgemäßen Verfahren eingesetzten Klarlacküberzugsmittel und/oder Versiegelungsüberzugsmittel können transparente Pigmente oder Füllstoffe sowie lackübliche Additive, wie z.B. Antioxidantien, Sensibilisatoren, Verlaufsmittel, Rheologiesteuerer sowie Lichtschutzmittel in lacküblichen Mengen enthalten.

Die im erfindungsgemäßen Verfahren eingesetzten Klarlacküberzugsmittel und/oder Versiegelungsüberzugsmittel weisen beispielsweise einen Festkörpergehalt von 25 bis 70 Gew.-%, bevorzugt 30 bis 70 Gew.-%, ebenfalls bevorzugt 25 bis 60 Gew.-% auf. Als Klarlacküberzugsmittel weisen sie bevorzugt einen Festkörpergehalt von 30 bis 70 Gew.-% auf, als Versiegelungsüberzugsmittel einen Festkörpergehalt von 25 bis 60 Gew.-%.

Der Festkörper wird gebildet durch den Harzfestkörper sowie weitere nicht-flüchtige Bestandteile.

Im allgemeinen handelt es sich bei den Klarlacküberzugsmitteln um Überzugsmittel auf Basis organischer Lösemittel. Ihr Festkörpergehalt beträgt dann beispielsweise 45 bis 70 Gew.-%, bevorzugt 50 bis 60 Gew.-%. Im allgemeinen handelt es sich bei den Versieeelungsüberzugsmitteln ebenfalls um Überzugsmittel auf Basis organischer Lösemittel. Ihr Festkörpergehalt beträgt dann 30 bis 60 Gew.-%, bevorzugt 40 bis 55 Gew.-%. Sowohl die Klarlacküberzugsmittel als auch die Versiegelungsüberzugsmittel enthalten dann flüchtige organische Lösemittel, wie beispielsweise Glykolether, wie Butylglykol, Butyldiglykol, Dipropylenglykoldimethylether, Dipropylenglykolmonomethylether, Ethylenglykoldimethylether; Glykoletherester, wie Ethylglykolacetat, Butylglykolacetat, 3-Methoxy-n-butylacetat, Butyldiglykolacetat, Methoxypropylacetat; Ester, wie Butylacetat, Isobutylacetat, Amylacetat; Ketone, wie Methylethylketon, Methylisobutylketon, Diisobutylketon, Cyclohexanon, Isophoron; Alkohole, wie Methanol, Ethanol, Propanol, Butanol, aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe.

Es kann sich bei den Versiegelungsüberzugsmitteln aber auch um wäßrige Überzugsmittel handeln, beispielsweise als Emulsion mit einem Festkörpergehalt von 25 bis 45 Gew.-%. Es kann sich bei den Klarlacküberzugsmitteln ebenfalls auch um wäßrige Überzugsmittel, beispielsweise mit einem Festkörpergehalt von 30 bis 70 Gew.-% handeln, beispielsweise als Emulsion. Dabei kann sowohl bei den Klarlacküberzugsmitteln als auch bei den Versiegelungsüberzugsmitteln der emulgierte Zustand durch Zusatz externer Emulgatoren erreicht werden oder es handelt sich um Systeme, die in Wasser selbstemulgierend wirkende Gruppen, beispielsweise ionische Gruppen enthalten. Die Emulsionssysteme können ebenfalls organische Lösemittel, insbesondere wassermischbare Lösemittel enthalten.

Beim erfindungsgemäßen Verfahren werden die Klarlacküberzugsmittel auf zuvor auf Substrate aufgebrachte farb- und/oder effektgebende, bevorzugt getrocknete oder ausgehärtete Basislackschichten aufgebracht. Die Basislackschichten können aus lösemittelbasierenden oder wäßrigen Basislacken aufgebracht werden. Die Basislacke enthalten übliche physikalisch trocknende und/oder chemisch vernetzende Bindemittel, anorganische und/oder organische Buntpigmente und/oder Effektpigmente, wie z.B. Metallic- oder Perlglanzpigmente sowie gegebenenfalls lackübliche Hilfsstoffe, wie z.B. Katalysatoren, Verlaufsmittel oder Antikratermittel. Diese Basislacke werden auf übliche Substrate entweder direkt oder auf vorbeschichtete Substrate aufgebracht. Die Substrate können vor dem Basislackauftrag z.B. mit üblichen Grundierungs-, Füller- und Zwischenschichten versehen werden, wie sie z.B. für Mehrschichtlackierungen auf dem Kraftfahrzeugsektor üblich sind. Als Substrate sind Metall- oder Kunststoffteile geeignet, beispielsweise Automobilkarossen und deren Teile. Vor der weiteren Beschichtung mit dem Klarlacküberzugsmittel werden die Basislackschichten abgelüftet oder bevorzugt unter solchen Bedingungen getrocknet und gegebenenfalls chemisch ausgehärtet, beispielsweise eingebrannt, daß sie nur geringe Anteile von flüchtigen Substanzen enthalten. Besonders zum Zeitpunkt der strahleninduzierten Vernetzungsreaktion durch radikalische Polymerisation der als Deckschicht auf die Basislackschicht aufgebrachten Klarlacküberzugsschicht sollen keine wesentlichen Anteile an flüchtigen Bestandteilen mehr in der Basislackschicht enthalten sein. Die Trocknung und gegebenenfalls chemische Aushärtung der Basislackschicht kann bei Umgebungstemperatur oder Temperaturen beispielsweise bis zu 150°C erfolgen. Dabei ist eine chemische Vernetzungsreaktion der Basislackschicht nicht ausgeschlossen.

Die Klarlacküberzugsmittel werden in einer Trockenschichtdicke von beispielsweise bevorzugt 25 bis 50 µm auf zuvor aufgebrachte farb- und/oder effektgebende Basislackschichten aufgebracht.

Bei der nach dem erfindungsgemäßen Verfahren mit einer Versiegelungsschicht zu versehenden äußeren Überzugsschicht einer lackierten Oberfläche eines Substrats kann es sich um eine Einschichtdecklackierung handeln, bevorzugt handelt es sich um äußere Decklackschichten oder äußere Klarlackschichten mehrschichtiger Lackierungen, insbesondere beispielsweise Basislack/Klarlack-Decklackierungen. von Kraftfahrzeugen oder Kraftfahrzeugteilen.

Die nach dem erfindungsgemäßen Verfahren auf die äußere Überzugsschicht lackierter Substratoberflächen aufzubringenden Versiegelungsschichten sollen die Beständigkeit der lackierten Substrate gegenüber Verkratzungen, beispielsweise Waschverkratzung oder Verkratzung infolge Gebrauchsbeanspruchung erhöhen. Sie können auf die gesamte sichtbare äußere Oberfläche eines Substrats oder nur auf Teilflächen davon, insbesondere kratzgefährdete Stellen aufgebracht werden. Beispiele für während des Gebrauchs besonders kratzgefährdete Stellen eines Kraftfahrzeugs sind Stellen im Bereich der Schlösser oder Türgriffe sowie von Ladekanten oder Türeinstiegen, insbesondere beispielsweise, wenn es sich um ausladende, unterhalb der Türeinstiege befindliche Schweller handelt, die beim Ein- und Aussteigen einer besonderen Kratzbeanspruchung ausgesetzt sind. Weitere Beispiele für kratzgefährdete Stellen einer Kraftfahrzeugkarosserie sind Stellen, die zur Aufnahme äußerer Lasten geeignet sind, beispielsweise das Dach oder das Fahrzeugheck.

Die Versiegelungsüberzugsmittel werden in einer Trockenschichtdicke von beispielsweise bevorzugt 10 bis 30 µm auf die äußere Überzugsschicht einer lackierten Oberfläche eines Substrats aufgebracht. Es kann zweckmäßig sein, die lackierte und zu versiegelnde Oberfläche vor Applikation des Versiegelungsüberzugsmittels anzuschleifen.
Bevorzugt geschieht die Applikation des Klarlacks und/oder Versiegelungsüberzugsmittels durch Spritzauftrag.

Gegebenfalls kann vor der Aushärtung des Klarlacküberzugs und/oder des Versiegelungsüberzugs kurz abgelüftet werden. Oftmals ist es zweckmäßig und bevorzugt, das Ablüften durch Erwärmen, beispielsweise bevorzugt unter Zuhilfenahme von Infrarotbestrahlung zu unterstützen. Es kann zweckmäßig sein, Maßnahmen während Applikation und Ablüften zu treffen, die einen Zutritt von Licht einer Wellenlänge kleiner 380 nm weitestgehend unterbinden.
Im Anschluß an die gegebenenfalls gewährte Ablüftphase wird die Klarlackschicht und/oder Versiegelungsschicht energiereicher Strahlung ausgesetzt. Dabei handelt es sich beispielsweise um Elektronenstrahlung oder bevorzugt um ultraviolette Strahlung. UV-Strahlenquellen mit Emissionen im Wellenlängenbereich von 180 bis 420 nm, bevorzugt von 200 bis 400 nm sind bevorzugt. Beispiele für solche UV-Strahlenquellen sind gegebenenfalls dotierte Quecksilberhochdruck-, -mitteldruck- und -niederdruckstrahler, Gasentladungsröhren, wie z.B. Xenonniederdrucklampen, mikrowellenangeregte UV-Strahler, Schwarzlichtröhren, Hochenergie-Elektronenblitz-Einrichtungen, wie z.B. UV-Blitzlampen.

Die UV-Strahlenquellen können kontinuierlich oder diskontinuierlich arbeitend ausgelegt sein. Eine Möglichkeit für kurzzeitig an- und ausschaltbare (taktbare) UV-Quellen besteht in der Vorschaltung von z.B. beweglichen Blenden oder es werden UV-Blitzlampen eingesetzt.

Die Anordnung der Strahlenquellen ist im Prinzip bekannt, sie kann den Gegebenheiten des Substrats und/oder der mit der unausgehärteten Versiegelungsüberzugsschicht versehenen Stellen eines Substrats, beispielsweise einer Automobilkarosserie oder deren Teilen angepaßt werden. Beispielsweise kann das Substrat im Ganzen bestrahlt werden, z.B. während des Durchlaufens eines UV-Bestrahlungstunnels oder es kann ein Strahlungsvorhang verwendet werden, der sich relativ zum Substrat bewegt. Außerdem kann über eine automatische Vorrichtung eine punktförmige Strahlenquelle oder ein Kleinflächenstrahler über das Substrat und/oder betreffende Stellen des Substrats geführt werden.

Der Abstand der Strahlenquelle kann fest sein oder er wird auf einen gewünschten Wert der Substratform angepaßt. Die Abstände der Strahlenquellen liegen bevorzugt im Bereich von 2 bis 50 cm, besonders bevorzugt 5 bis 30 cm, zur Oberfläche der unausgehärteten Klarlackschicht bzw. Versiegelungsschicht.

Selbstverständlich können die beispielhaft aufgezählten Verfahrensmaßnahmen auch kombiniert werden. Das kann in einem einzigen Prozeßschritt erfolgen oder in zeitlich oder räumlich voneinander getrennten Prozeßschritten.

Die Bestrahlungsdauer liegt beispielsweise im Bereich der Dauer eines UV-Blitzes von beispielsweise 100 Millisekunden bis 5 Minuten, je nach verwendetem Bestrahlungsverfahren und Art und Anzahl der UV-Strahlungsquellen. Bevorzugt ist eine Bestrahlungsdauer, d.h. eine eigentliche Einwirkungszeit der UV-Strahlung auf die unausgehärtete Klarlackschicht bzw. Versiegelungsschicht von unter 5 Minuten.

Nach der Aushärtung der Klarlackschicht und/oder Versiegelungsschicht kann eine thermische Behandlung derselben durch Konvektion, IR- und/oder NIR-Bestrahlung angeschlossen werden, beispielsweise falls die Klarlackschicht und/oder Versiegelungsschicht aus einem thermolabile Radikalinitiatoren enthaltenden Klarlacküberzugsmittel und/oder Versiegelungsüberzugsmittel aufgebracht worden ist.

Die mit dem erfindungsgemäßen Verfahren hergestellten Basislack/Klarlack-Zweischichtlackierungen verleihen den mit ihnen versehenen Substraten, beispielsweise Kraftfahrzeugkarossen oder deren Teilen, Widerstandsfähigkeit gegenüber Verkratzungen, beispielsweise Waschverkratzung oder Verkratzung infolge Gebrauchsbeanspruchung. Beispiele für während des Gebrauchs besonders kratzgefährdete Stellen eines Kraftfahrzeugs sind Stellen im Bereich der Schlösser oder Türgriffe sowie von Ladekanten, Türeinstiegen oder Schwellern. Weitere Beispiele für kratzgefährdete Stellen einer Kraftfahrzeugkarosserie sind Stellen, die zur Aufnahme äußerer Lasten geeignet sind, beispielsweise das Dach oder das Fahrzeugheck. Die erfindungsgemäß hergestellten Basislack/Klarlack-Zweischichtlackierungen sind daher besonders geeignet als Fahrzeug- und Fahrzeugteilelackierungen.

Farbton- und Effektahweichungen der Basislack/Klarlack-Zweischichtlackierungen als Folge einer Anlösung des Basislacks nach der Applikation des Klarlacks sind nicht zu beobachten. Die mit dem erfindungsgemäßen Verfahren hergestellten Basislack/Klarlack-Zweischichtlackierungen und/oder Versiegelungsschichten zeichnen sich aus durch hervorragende Kratzfestigkeit und eine gute Flexibilität.

### Beispiele 1a-1 (Herstellung von Urethanacrylaten aus Polyol, Polyisocyanat und Butandiolmonoacrylat (BDMA), allgemeine Herstellungsvorschrift):

Entsprechend Tabelle 1 werden 70 bzw. 80 gew.-%ige Lösungen von Urethanacrylaten hergestellt, indem zunächst das Polyol im Lösemittel (LM) bei 65(C gelöst wird. Anschließend wird bei 65°C das Polyisocyanat zugegeben und der Ansatz auf 70°C geheizt. Nach Beendigung der exothermen Reaktion wird bei 80°C bis zur konstanten NCO-Zahl gefahren. Danach werden 4-Methoxyphenol (Inhibitor) und DBTL (Katalysator) in einer Menge von jeweils 0,05 Gew.-%, bezogen auf den gesamten Ansatz zugegeben. Bei 60°C wird BDMA so zudosiert, daß 80°C nicht überschritten werden. Anschließend wird nach Erreichen einer NCO-Zahl < 0,1 der Festkörpergehalt mit Lösemittel (LM) eingestellt.

Nach diesem Verfahren wurden die in Tabelle 1 angegebenen Beispiele durchgeführt.

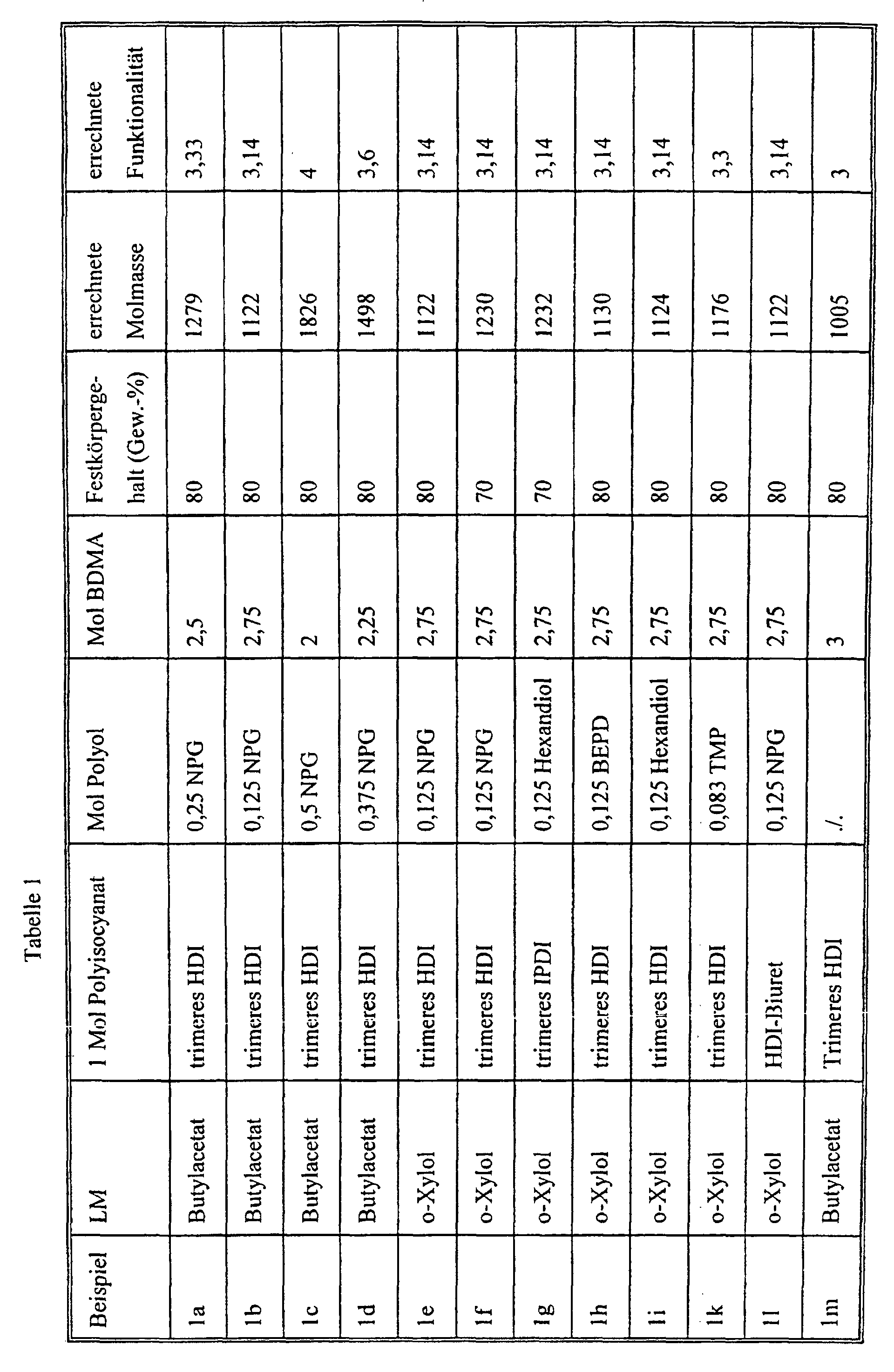

Verwendete Abkürzungen:
BDMA, Butandiolmonoacrylat
DBTL, Dibutylzinndilaurat
HDI, Hexandiisocyanat
IPDI, Isophorondiisocyanat
NPG, Neopentylglykol
BEPD, Butylethylpropandiol
TMP, Trimethylolpropan

### Beispiel 1n (Herstellung eines Urethanacrylats):

Es wird eine 70 gew.-%ige Lösung eines Urethanacrylats hergestellt, indem zunächst 1,5 mol Pentaerythrittriacrylat in Butylacetat bei 65°C gelöst werden. Anschließend wird bei 65°C 1 mol HDI-Biuret zugegeben und der Ansatz auf 70°C geheizt. Nach Beendigung der exothermen Reaktion wird bei 80°C bis zur konstanten NCO-Zahl gefahren. Danach werden 4-Methoxyphenol (Inhibitor) und DBTL (Katalysator) in einer Menge von jeweils 0,05 Gew.-%, bezogen auf den gesamten Ansatz zugegeben. Bei 60°C werden 1,5 mol BDMA so zudosiert, daß 80°C nicht überschritten werden. Anschließend wird nach Erreichen einer NCO-Zahl < 0,1 der Festkörpergehalt auf 70 Gew.-% in Butylacetat eingestellt. Das Urethanacrylat hat eine errechnete Molmasse von 1236 und eine errechnete Funktionalität von 6.

### Beispiele 2a-i (Herstellung von Klarlacküberzugsmitteln und Mehrschichtlackierungen, erfindungsgemäß):

Die Harzlösungen aus den Beispielen 1a-e und 1h-1 werden jeweils mit Butylacetat auf einen Festkörpergehalt von 60 Gew.-% verdünnt. Jeweils 97 Gew.-Teile dieser Lösungen werden jeweils mit 0,1 Gew.-Teilen eines radikalisch polymerisierbaren Silikon-Verlaufsadditivs, 1 Gew.-Teil eines Lichtschutzmittels (HALS, hindered amine light stabilizer), 0,5 Gew.-Teilen eines UV-Absorbers auf Benztriazol-Basis, 1 Gew.-Teil eines Photoinitiators aus der Gruppe der alpha-Hydroxyketone und 0,4 Gew.-Teilen eines Photoinitiators aus der Gruppe der Acylphosphinoxide vermischt.

Die so erhaltenen Klarlacküberzugsmittel werden jeweils durch Spritzen in einer Trockenschichtdicke von 35 µm auf mit einer dreischichtigen Vorbeschichtung aus kathodischer Tauchlack (KTL)-Grundierung, Füller-, und 10 Minuten bei 80°C getrockneter Basislackschicht versehene Prüfbleche aufgebracht. Nach 10 minütigem Ablüften bei 60°C wird die Klarlacküberzugsschicht durch UV-Bestrahlung gehärtet (Quecksilbermitteldruckstrahler mit einer Leistung von 100 W/cm, Objektabstand 14 cm, Bandgeschwindigkeit 1,5 m/min).

### Beispiele 3a-k (Herstellung von Versiegelungsüberzugsmitteln und versiegelten Mehrschichtlackierungen, erfindungsgemäß):

Die Harzlösungen aus den Beispielen 1 a bis e und 1h-m werden jeweils mit Butylacetat auf einen Festkörpergehalt von 40 Gew.-% verdünnt. Jeweils 97 Gew.-Teile dieser Lösungen werden jeweils mit 0,1 Gew.-Teilen eines radikalisch polymerisierbaren Silikon-Verlaufsadditivs, 1 Gew.-Teil eines Lichtschutzmittels (HALS, hindered amine light stabilizer), 0,5 Gew.-Teilen eines UV-Absorbers auf Benztriazol-Basis, 1 Gew.-Teil eines Photoinitiators aus der Gruppe der alpha-Hydroxyketone und 0,4 Gew.-Teilen eines Photoinitiators aus der Gruppe der Acylphosphinoxide vermischt.

Die so erhaltenen Versiegelungsüberzugsmittel werden jeweils durch Spritzen in einer Trockenschichtdicke von 20 µm auf mit einer typischen vierschichtigen Automobillackierung (kathodische Tauchlack (KTL)-Grundierung, Füller-, Basislackund Klarlackschicht) versehene Prüfbleche aufgebracht. Nach 5 minütigem Ablüften bei 60°C wird die Versiegelungsüberzugsschicht durch UV-Bestrahlung gehärtet (Quecksilbermitteldruckstrahler mit einer Leistung von 100 W/cm, Objektabstand 14 cm, Bandgeschwindigkeit 1,5 m/min).

### Beispiele 2 k-m (Herstellung von Klarlacküberzugsmitteln und Mehrschichtlackierungen, Vergleichsbeispiele):

Es wird wie in den Beispielen 2a-i gearbeitet, wobei jedoch die Harzlösungen aus den Beispielen 1f, g, n verwendet werden.

Die Klarlacküberzugsmittel 2a-m führten nicht zu einer farbtonverändernden Anlösung des Basislacks.

**Tabelle 2**

| stellt technologische Prüfergebnisse der Mehrschichtlackierungen 2a-m zusammen: | | | |
|---|---|---|---|
| Mehrschichtlackierung | Harzlösung aus Beispiel | Restglanz (%)¹⁾ | Elastizität²⁾ |
| Erfindungsgemäße Beispiele | | | |
| 2a | 1a | 84 | 4,9 |
| 2b | 1b | 80 | 5,3 |
| 2c | 1c | 82 | 5,0 |
| 2d | 1d | 80 | 5,0 |
| 2e | 1e | 83 | 5,3 |
| 2f | 1h | 79 | 5,3 |
| 2g | 1i | 82 | 5,4 |
| 2h | 1k | 83 | 5,2 |
| 2i | 1l | 82 | 5,5 |

| Vergleichsbeispiele: | | | |
|---|---|---|---|
| 2k | 1f | 25 | 3,6 |
| 2l | 1g | 23 | 4,3 |
| 2m | 1n | 68 | 3,2 |

| | | | |
|---|---|---|---|
| 1) Gemessen wurde der Restglanz in % (Verhältnis aus Anfangsglanz (20°) der Mehrschichtlackierung zu deren Glanz nach Waschverkratzung, Glanzmessung jeweils bei einem Beleuchtungswinkel von 20°). Die Waschverkratzung wurde unter Verwendung der Laborwaschstraße der Firma Amtec Kistler durchgeführt (vgl. Th. Klimmasch und Th. Engbert, Entwicklung einer einheitlichen Laborprüfmethode für die Beurteilung der Waschstraßenbeständigkeit von Automobil-Decklacken, in DFO-Berichtsband 32, Seiten 59 bis 66, Technologie-Tage, Berichtsband des Seminars am 29. und 30.4.97 in Köln, Herausgeber Deutsche Forschungsgesellschaft für Oberflächenbehandlung e.V., Adersstraße 94, 40215 Düsseldorf). | | | |
| 2) Gemessen wurde die Tiefung gemäß DIN ISO 1520. | | | |

### Beispiele 3 1-n (Herstellung von Versiegelungsüberzugsmitteln und versiegelten Mehrschichtlackierungen, Vergleichsbeispiele):

Es wird wie in den Beispielen 3a-k gearbeitet, wobei jedoch die Harzlösungen aus den Beispielen 1f, g, n verwendet werden.

**Tabelle 3**

| stellt technologische Prüfergebnisse der versiegelten Mehrschichtlackierungen 3a-n zusammen: | | | |
|---|---|---|---|
| Versiegelte Mehrschichtlackierung | Harzlösung aus Beispiel | Restglanz (%)¹⁾ | Elastizität²⁾ |
| erfindungsgemäße Beispiele | | | |
| 3a | 1a | 84 | 5,8 |
| 3b | 1b | 80 | 6,2 |
| 3c | 1m | 80 | 6,3 |
| 3d | 1c | 82 | 5,5 |
| 3e | 1d | 80 | 5,8 |
| 3f | 1e | 83 | 6,0 |
| 3g | 1g | 79 | 6,1 |
| 3h | 1i | 82 | 6,0 |
| 3i | 1k | 83 | 5,9 |
| 3k | 1l | 82 | 6,0 |

| Vergleichsbeispiele: | | | |
|---|---|---|---|
| 3l | 1f | 25 | 4,5 |
| 3m | 1g | 23 | 6,0 |
| 3n | 1n | 68 | 3,8 |

| | | | |
|---|---|---|---|
| ¹⁾ Gemessen wurde der Restglanz in % (Verhältnis aus Anfangsglanz (20°) der versiegelten Mehrschichtlackierung zu deren Glanz nach Waschverkratzung, Glanzmessung jeweils bei einem Beleuchtungswinkel von 20°). Die Waschverkratzung wurde unter Verwendung der Laborwaschstraße der Firma Amtec Kistler durchgeführt (vgl. Th. Klimmasch und Th. Engbert, Entwicklung einer einheitlichen Laborprüfmethode für die Beurteilung der Waschstraßenbeständigkeit von Automobil-Decklacken, in DFO-Berichtsband 32, Seiten 59 bis 66, Technologie-Tage, Berichtsband des Seminars am 29. und 30.4.97 in Köln, Herausgeber Deutsche Forschungsgesellschaft für Oberflächenbehandlung e.V., Adersstraße 94, 40215 Düsseldorf). | | | |
| ²⁾ Gemessen wurde die Tiefung gemäß DIN ISO 1520. | | | |

## Patentansprüche

1. Verfahren zur Herstellung einer Basislack/Klarlack-Zweischichtlackierung und/oder einer transparenten Versiegelungsschicht auf der äußeren Überzugsschicht einer lackierten Oberfläche eines Substrats, bei dem man eine durch radikalische Polymerisation härtbare Klarlackschicht auf eine zuvor aufgebrachte farb- und/oder effektgebende Basislackschicht und/oder ein transparentes, durch radikalische Polymerisation härtbares Überzugsmittel auf der lackierten Oberfläche eines Substrats aufbringt und unter Einwirkung energiereicher Strahlung aushärtet, **dadurch gekennzeichnet, daß** man zur Aufbringung der äußeren Klarlackschicht und/oder Versiegelungsschicht ein transparentes Überzugsmittel verwendet, dessen Harzfestkörper besteht aus:
I. 70 bis 100 Gew.-% eines oder mehrerer radikalisch polymerisierbare, olefinisch ungesättigte Gruppen aufweisender Oligo- und/oder Prepolymerer und
II. 0 bis 30 Gew.-% eines oder mehrerer radikalisch polymerisierbare, olefinisch ungesättigte Gruppen aufweisender Reaktivverdünner mit errechneten Molmassen von jeweils unter 500,
wobei die Komponente I zu 75 bis 100 Gew.-% aus einem aliphatischen Urethan(meth)acrylat mit einer (Meth)acryloylfunktionalität von durchschnittlich 3 bis 4,5 pro Molekül und einer errechneten Molekularmasse von mindestens 826 besteht, welches erhältlich ist durch Umsetzung von acyclischen aliphatischen Diisocyanaten mit 8 C-Atomen und/oder von solchen Diisocyanaten abgeleiteten Polyisocyanaten mit einer oder mehreren niedermolekularen aliphatischen Verbindungen, die eine oder mehrere Hydroxygruppen und zugleich eine oder mehrere (Meth)acryloylgruppen aufweisen, sowie gegebenenfalls mit einem oder mehreren niedermolekularen aliphatischen Diolen und/oder Polyolen.

2. Verfahren nach Anspruch 1, **dadurch gekennzeichnet, daß** der Harzfestkörper des transparenten Überzugsmittels besteht aus:
I. 90 bis 100 Gew.-% eines oder mehrerer radikalisch polymerisierbare, olefinisch ungesättigte Gruppen aufweisender Oligo- und/oder Prepolymerer und
II. 0 bis 10 Gew.-% eines oder mehrerer radikalisch polymerisierbare, olefinisch ungesättigte Gruppen aufweisender Reaktivverdünner mit errechneten Molmassen von jeweils unter 500.

3. Verfahren nach Anspruch 1 oder 2, **dadurch gekennzeichnet, daß** als acyclische aliphatische Diisocyanate mit 8 C-Atomen Methylpentandiisocyanat (MPDI) und/oder Hexandiisocyanat (HDI) und als von diesen abgeleitete Polyisocyanate solche mit Carbodiimidgruppen, Allophanatgruppen, Isocyanuratgruppen, Uretdiongruppen und/oder Biuretgruppen verwendet werden.

4. Verfahren nach Anspruch 3, **dadurch gekennzeichnet, daß** als Polyisocyanat das Tris-(6-isocyanatohexyl)-biuret und/oder das sich von HDI ableitende Isocyanurat verwendet werden.

5. Verfahren zur Herstellung einer Versiegelungsschicht nach einem der Ansprüche 1 bis 4, **dadurch gekennzeichnet, daß** die transparente Versiegelungsschicht auf eine Einschichtdecklackierung oder auf die äußere Decklackschicht oder äußere Klarlackschicht mehrschichtiger Lackierungen aufgebracht wird.

6. Verfahren nach einem der Ansprüche 1 bis 5, **dadurch gekennzeichnet, daß** es zur Lackierung und/oder Versiegelung von Kraftfahrzeugen oder Kraftfahrzeugteilen durchgeführt wird.

7. Verfahren nach einem der Ansprüche 1 bis 6, **dadurch gekennzeichnet, daß** die Versiegelungsschicht auf besonders kratzgefährdete Stellen der Oberfläche eines lackierten Substrats aufgetragen wird.

8. Verfahren nach Anspruch 7, **dadurch gekennzeichnet, daß** die Versiegelungsschicht auf Stellen im Bereich der Schlösser, Türgriffe, Türeinstiege, Ladekanten, Dach und/oder Heck eines Kraftfahrzeugs aufgetragen wird.

9. Substrat, lackiert nach dem Verfahren eines der Ansprüche 1 bis 8.

## Claims

1. Process for the production of a base lacquer/clear lacquer two-coat lacquer system and/or a transparent sealing coat on the outer finishing coat of a lacquered surface of a substrate, in which a clear lacquer coat cured by radical polymerisation is applied to a previously applied colour- and/or effect-providing base lacquer coat and/or a transparent coating agent cured by radical polymerisation is applied to the lacquered surface of a substrate and cured by the action of high-energy radiation, **characterised in that** a transparent coating agent is used to apply the outer clear lacquer coat and/or sealing coat, of which the resin solid consists of:
I. 70 to 100 wt.% of one or more radically polymerisable oligo- and/or prepolymers containing olefinically unsaturated groups and
II. 0 to 30 wt.% one or more radically polymerisable reactive thinners having olefinically unsaturated groups with calculated molar masses of less than 500 each,
wherein 75 to 100 wt.% of component I is an aliphatic urethane (meth)acrylate with an average (meth)acryloyl functionality of 3 to 4.5 per molecule and a calculated molecular mass of at least 826, which can be obtained by reacting acyclic aliphatic diisocyanates with 8 C atoms and/or polyisocyanates derived from such diisocyanates with one or more low-molecular aliphatic compounds, which have one or more hydroxy groups and at the same time one or more (meth)acryloyl groups, and optionally with one or more low-molecular aliphatic diols and/or polyols.

2. Process according to claim 1, **characterised in that** the resin solid of the transparent coating agent consists of:
I. 90 to 100wt.% of one or more radically polymerisable oligo- and/or prepolymers containing olefinically unsaturated groups and
II. 0 to 10 wt.% of one or more radically polymerisable reactive thinners containing olefinically unsaturated groups with calculated molar masses of less than 500 each.

3. Process according to claim 1 or 2, **characterised in that** methyl pentane diisocyanate (MPDI) and/or hexane diisocyanate (HDI) are used as acyclic aliphatic diisocyanates with 8 C atoms and polyisocyanates with carbodiimide groups, allophanate groups, isocyanurate groups, uretdione groups and/or biuret groups are used as the polyisocyanates derived from them.

4. Process according to claim 3, **characterised in that** tris-(6-isocyanatohexyl)-biuret and/or the isocyanurate derived from HDI is used as the polyisocyanate.

5. Process for the production of a sealing coat according to one of claims 1 to 4, **characterised in that** the transparent sealing coat is applied to a single-coat finishing lacquer coat or to the outer finishing lacquer coat or outer clear lacquer coat of multi-coat lacquers.

6. Process according to one of claims 1 to 5, **characterised in that** it is used for lacquering and/or sealing motor vehicles or motor vehicle parts.

7. Process according to one of claims 1 to 6, **characterised in that** the sealing coat is applied to areas of the surface of a lacquered substrate that are particularly subject to scratching.

8. Process according to claim 7, **characterised in that** the sealing coat is applied to areas near the locks, door handles, door entrances, loading edges, roof and/or back of a motor vehicle.

9. Substrate, lacquered according to the process of one of claims 1 to 8.

## Revendications

1. Procédé de fabrication d'une peinture bicouches vernis de base/vernis transparent et/ou d'une couche bouche-pores transparente sur la couche de revêtement extérieure d'une surface peinte d'un substrat, dans lequel on applique une couche de vernis transparent durcissable par polymérisation radicalaire sur une couche préalablement appliquée de vernis de base colorant et/ou à effet, et/ou un agent de revêtement transparent durcissable par polymérisation radicalaire sur la surface peinte d'un substrat et on durcit sous l'action d'un rayonnement énergétique, **caractérisé en ce qu'**on utilise, pour appliquer la couche de vernis transparent et/ou la couche bouche-pores extérieure(s) un agent de revêtement transparent dont le corps solide résineux est constitué de :
I. 70 à 100% en poids d'un ou plusieurs oligomères et/ou prépolymères présentant des groupes polymérisables de façon radicalaire ou oléfiniquement insaturés,
II. 0 à 30% en poids d'un ou plusieurs diluants réactifs présentant des groupes polymérisables de façon radicalaire ou oléfiniquement insaturés ayant des masses molaires calculées à chaque fois inférieures à 500,
la composante I étant constituée à 75 à 100% en poids d'un (méth)acrylate d'uréthane aliphatique à fonctionnalité (méth)acryloyle de 3 à 4,5 en moyenne par molécule et une masse moléculaire calculée d'au moins 826, lequel peut être obtenu par conversion de diisocyanates acycliques aliphatiques portant 8 atomes de C et/ou de polyisocyanates dérivés de tels diisocyanates ayant un ou plusieurs composés aliphatiques à faible poids moléculaire qui présentent un ou plusieurs groupes hydroxy et en même temps un ou plusieurs groupes (méth)acryloyle, ainsi que, le cas échéant, ayant un ou plusieurs diols et/ou polyols aliphatiques à faible poids moléculaire.

2. Procédé selon la revendication 1, **caractérisé en ce que** le corps solide résineux de l'agent de revêtement transparent est constitué de :
I. 90 à 100% en poids d'un ou plusieurs oligomères et/ou prépolymères présentant des groupes polymérisables de façon radicalaire ou oléfiniquement insaturés,
II. 0 à 10% en poids d'un ou plusieurs diluants réactifs présentant des groupes polymérisables de façon radicalaire ou oléfiniquement insaturés ayant des masses molaires calculées à chaque fois inférieures à 500.

3. Procédé selon la revendication 1 ou 2, **caractérisé en ce qu'**on utilise, en tant que diisocyanates aliphatiques acycliques portant 8 atomes de C, du diisocyanate de méthylpentane (MPDI) et/ou du diisocyanate d'hexane (HDI) et, en tant que polyisocyanates dérivés de ceux-ci, ceux ayant des groupes carbodiimide, des groupes allophanate, des groupes isocyanurate, des groupes uretdion et/ou des groupes biuret.

4. Procédé selon la revendication 3, **caractérisé en ce qu'**on utilise, comme polyisocyanate, le tri-(6-isocyanatohexyle)-biuret et/ou l'isocyanurate dérivé du HDI.

5. Procédé de fabrication d'une couche bouche-pores selon l'une quelconque des revendications 1 à 4, **caractérisé en ce que** la couche bouche-pores transparente est appliquée sur une peinture de finition monocouche ou sur une couche de peinture de finition extérieure ou une couche de vernis transparent extérieure de peinture multicouches.

6. Procédé selon l'une quelconque des revendications 1 à 5, **caractérisé en ce qu'**il est réalisé pour la peinture et/ou la vitrification de véhicules à moteur ou de pièces de véhicules à moteur.

7. Procédé selon l'une quelconque des revendications 1 à 6, **caractérisé en ce que** la couche bouche-pores est appliquée sur des endroits de la surface d'un substrat peint particulièrement exposés aux rayures.

8. Procédé selon la revendication 7, **caractérisé en ce que** la couche bouche-pores est appliquée sur des endroits au niveau des serrures, poignées de porte, entrées de porte, rebords de chargement, toit et/ou arrière d'un véhicule à moteur.

9. Substrat, peint selon le procédé de l'une quelconque des revendications 1 à 8.
